# EUROPEAN PATENT APPLICATION

(11) **EP 1 721 510 A2**
(43) Date of publication of application: **15.11.2006**
(21) Application number: 06252397.2
(22) Date of filing: 05.05.2006
(51) Int. Cl.: A01D 42/02, A01D 51/00, A01G 1/12, A01B 45/02

(54) **Lawn Rake**

(30) Priority: 08.05.2005 CN 200520071529; 08.05.2005 CN 200520071532
(71) Applicant: Zhao, Kong, Suzhou Jiangsu 215011 (CN)
(72) Inventor: Zhao, Kong, Suzhou Jiangsu 215011 (CN)
(74) Representative: Pratt, David Martin

(57) **Abstract**

A lawn rake comprises a main body (1), a rake head (4) for raking a lawn, and a container (12) for collecting raked material. The container (12) is substantially closed apart from an entry region (11) in the flow path of raked material from the rake head (4).

## Description

This invention relates to a lawn rake for raking dead grass/debris from a lawn.

A lawn raking machine is a commonly-used device that allow a user to rake moss and thatch from lawns in a quick and convenient manner. Several types exist, including types that are powered and types that also collect the debris for easy disposal.

A known lawn rake includes a frame, a debris collection box disposed on the frame, a motor and a rake head provided with a plurality of tines. The motor drives the rake head so that the tines rake dead grass, moss and other debris from a lawn and deposit the debris into the debris collection box. However, the motor and the debris collection box of this known lawn rake are disposed respectively at the front and rear sides of the rake head, thereby resulting in a lawn rake which is fairly large. This, in turn, leads to this lawn rake being inconvenient to use.

One feature of the collecting type machine is that the debris collection box tends to become full very quickly. One type of collecting machine utilises a simple mechanical compacting device to allow increased time between emptying of the collection box. The problem with this type of compacting system is that a deliberate intervention is required on the part of the user, thus interrupting the task of raking the lawn.

Another feature of a collecting lawn rake is that the collection relies on the rotating action of the raking tines to impart energy to the debris and throw the debris into the receptacle. In addition the receptacle is often open-topped, and the stream of debris being thrown into the receptacle can easily be scattered by the breeze, thereby reducing the collection efficiency.

The invention to be described overcomes the deficiencies of current collection systems and gives an improved collection capability.

An aim of the invention is to provide a lawn rake having an improved compacting system. Another aim is to provide a lawn rake which has a compact structure and a small size.

The present invention provides a lawn rake comprising a main body, a rake head for raking a lawn, and a container for collecting raked material, the container being substantially closed apart from an entry region in the flow path of raked material from the rake head.

Preferably, the main body houses the container, and defines an enclosed channel leading from the rake head to the entry region of the container.

The lawn rake may further comprise air flow means for generating an air flow to assist flow of raked material from the rake head to the container. An air moving device may constitute the air flow means. In this case, the air moving device may be constituted by an impeller driven by a motor housed within the main body.

Advantageously, the motor is positioned between the rake head and the container. This ensures that the lawn rake has a compact structure, and is easy to carry and transport.

Preferably, the motor also drives the rake head, and the impeller is positioned to provide cooling air to the motor.

In a preferred embodiment, the channel defines an airflow passage extending from the airflow means to an entrance to the container, and a mesh screen covering the entrance.

Preferably, the entrance is adjacent to the entry region.

Conveniently, the airflow passage has a transverse cross-section that is wider at the entrance than in the region of the airflow means.

In a preferred embodiment, the lawn rake further comprises a debris guide plate extending from the rear of the rake head towards the entry region, the debris guide plate passing over the rake head.

Advantageously, the lawn rake further comprises wheels at the front and the rear of the main body. Preferably, the container is mounted substantially within the wheel base defined by the wheels at the front and the rear of the main body.

Preferably, the lawn rake further comprises air vents provided in at least one wall of the container.

The invention also provides a lawn rake comprising a main body, a rake head for raking a lawn, and a container for collecting raked material, and a motor for driving the rake head, wherein the motor is positioned between the rake head and the container.

Preferably, the motor drives the rake head via a transmission device.

The invention further provides a a main body, a rake head for raking a lawn, a container for collecting raked material, and airflow means for generating an airflow to assist flow of raked material from the rake head to the container.

The invention will now be described in greater detail, by way of example, with reference to the drawings, in which:-
Fig. 1 is a side view of a lawn rake constructed in accordance with the invention;
Fig. 2 is a part-sectional side view of the lawn rake of Figure 1;
Fig. 3 is a plan view of the lawn rake of Figures 1 and 2;
Fig. 4 is a part-sectional plan view of the lawn rake after disassembly of its debris collection box and handle;
Fig. 5 is a part-sectional rear view of the lawn rake after disassembly of its debris collection box handle; and
Fig. 6 is a perspective view of the lawn rake after disassembly of its debris collection box and handle.

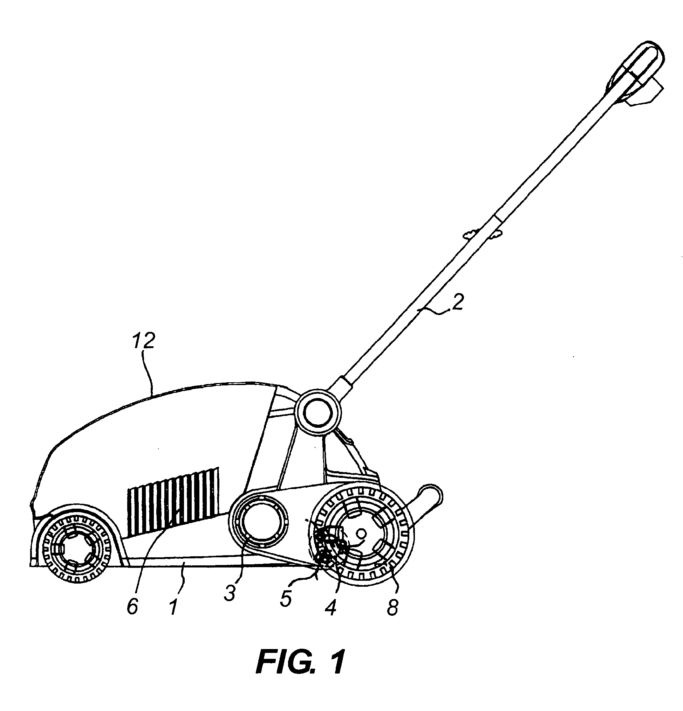

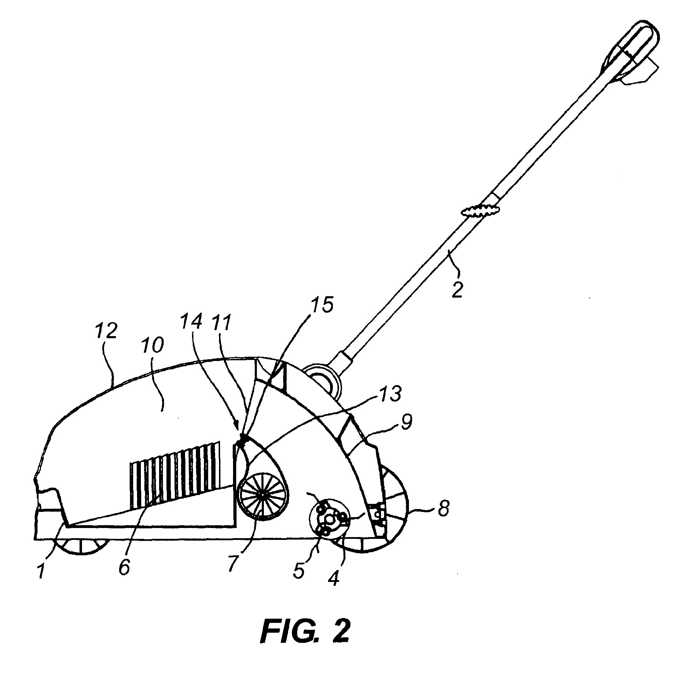

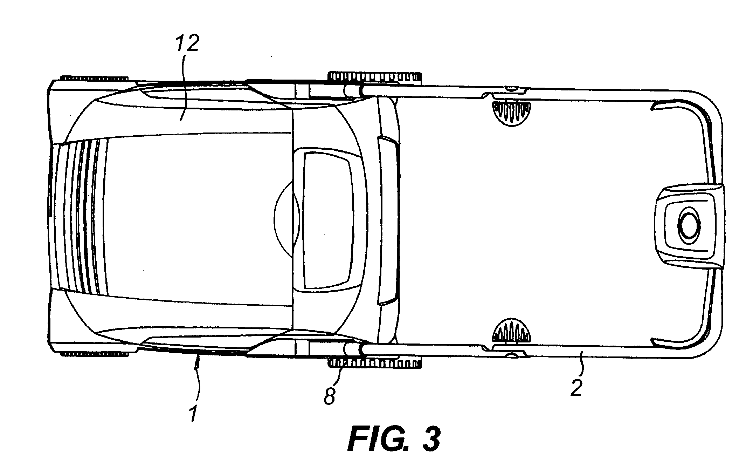

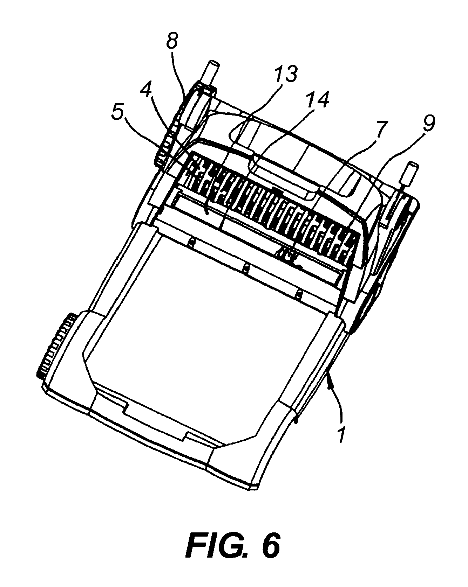

Referring to the drawings, Figures 1 to 6 show a lawn rake including a main body (frame) 1, a debris collection box 12 disposed at the front portion of the frame, and a rake head 4 disposed at the rear of the frame. The rake head 4 has a plurality of tines 5. The debris collection box 12 is provided with a plurality of air outlets 6 on the side walls thereof, and forms a debris collection chamber 10 having a debris entrance 11. The debris collection box 12 is closed at the top. Indeed, apart from the debris entrance 11 and the air outlets 6, the debris collection box 12 defines a completely enclosed debris collection chamber 10. A motor 3 is arranged between the debris collection box 12 and the rake head 4, the motor being connected to the rake head 4 through a transmission (not shown). Therefore, the space between the debris collection box 12 and the rake head 4 (which is unoccupied in known lawn rakes) is used, the motor 3 being arranged in this space. Consequently, the lawn rake has a compact structure, and so is convenient for carrying and for transportation.

The lawn rake is supported by wheels 8, at its corners, and a handle 2 is provided at its rear. A user may, therefore, stand behind the lawn rake to push it. The frame 1 forms a debris guide plate 9, which extends from the rear of the rake head 4, passes above the rake head, and extends towards the debris entrance 11 of the debris collection box 12. In use, the motor 3 drives the rake head 4 via the transmission, so that the tines 5 of the rake head rake debris/dead grass from a lawn and force the debris/dead grass along the debris guide plate 9, through the debris entrance 11 and into the debris collection chamber 10.

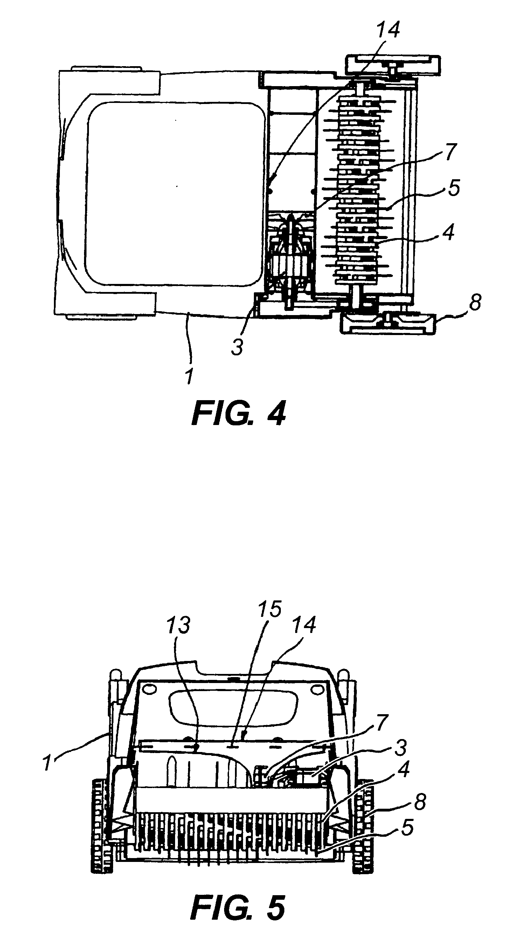

A rotor shaft (not shown) of the motor 3 is provided with an impeller 7. The frame 1 forms a guide passage 13 having a transverse cross-section which flares from its bottom to its top (see Figure 5) for smoothly guiding an airstream generated by the impeller 7. The guide passage 13 has a top opening defining a vent 14 which is aligned with the debris entrance 11, and with a bottom opening which is aligned with the impeller 7. A mesh screen 15 covers the vent 14 to prevent debris reaching the impeller 7 and the motor 3. In use, the motor 3 rotates the rotor shaft to drive the impeller 7, thereby generating an airstream for cooling the motor 3, and for entraining air from the passageway leading from the rake head 4 to the debris entrance 11, thereby assorting the flow of debris. At the same time, the air flow from the impeller 7 removes debris which tends to collect on the lip adjacent to the entrance 11, thereby further assisting the flow of debris into the chamber 10.

Moreover, the air flow from the impeller 7 also compacts the debris collected in the debris collection box 12. Furthermore, the airstream passing through the guide passage 13 and into the vent 14 is a smooth airflow, so that the lawn rake can blow debris into the debris collection chamber 10 along its whole transverse direction (see Figure 5). The mesh screen 15 prevents the debris from entering into the motor 3 along the guide passage 13.

## Claims

1. A lawn rake comprising a main body (1), a rake head (4) for raking a lawn, and a container (12) for collecting raked material, the container being substantially closed apart from an entry region (11) in the flow path of raked material from the rake head.

2. A lawn rake as claimed in claim 1, wherein the main body (1) houses the container (12), and defines an enclosed channel (13) leading from the rake head (4) to the entry region (11) of the container.

3. A lawn rake as claimed in claim 1 or claim 2, further comprising air flow means (7) for generating an air flow to assist flow of raked material from the rake head (4) to the container (12).

4. A lawn rake as claimed in claim 3, wherein an air moving device constitutes the air flow means.

5. A lawn rake as claimed in claim 4, wherein the air moving device is constituted by an impeller (7) driven by a motor (3) housed within the main body (1).

6. A lawn rake as claimed in claim 5, wherein the motor (3) is positioned between the rake head (4) and the container (12).

7. A lawn rake as claimed in claim 5 or claim 6, wherein the motor (3) also drives the rake head (4).

8. A lawn rake as claimed in any one of claims 5 to 7, wherein the impeller (7) is positioned to provide cooling air to the motor (3).

9. A lawn rake as claimed in any one of claims 2 to 8, wherein the channel (13) defines an airflow passage extending from the airflow means (7) to an entrance (14) to the container (12).

10. A lawn rake as claimed in claim 9, further comprising a mesh screen (15) covering the entrance (14).

11. A lawn rake as claimed in claim 9 or claim 10, wherein the entrance (12) is adjacent to the entry region (11).

12. A lawn rake as claimed in any one of claims 9 to 11, wherein the airflow passage (13) has a transverse cross-section that is wider at the entrance (14) than in the region of the airflow means (7).

13. A lawn rake as claimed in any one of claims 1 to 12, further comprising a debris guide plate (9) extending from the rear of the rake head (4) towards the entry region (11), the debris guide plate passing over the rake head.

14. A lawn rake as claimed in any one of claims 1 to 13, further comprising wheels (8) at the front and the rear of the main body (1).

15. A lawn rake as claimed in claim 14, wherein the container (12) is mounted substantially within the wheel base defined by the wheels (8) at the front and the rear of the main body (1).

16. A lawn rake as claimed in any one of claims 1 to 15, further comprising air vents (16) provided in at least one wall of the container (12).

17. A lawn rake as claimed in any one of claims 1 to 16, wherein the rake head (4) is provided with a plurality of tines (5).

18. A lawn rake comprising a main body (1), a rake head (4) for raking a lawn, and a container (12) for collecting raked material, and a motor (3) for driving the rake head, wherein the motor is positioned between the rake head and the container.

19. A lawn rake as claimed in claim 18, wherein the motor (3) drives the rake head (4) via a transmission device.

20. A lawn rake comprising a main body (1), a rake head (4) for raking a lawn, a container (12) for collecting raked material, and airflow means (7) for generating an airflow to assist flow of raked material from the rake head to the container.
